# FASCICULE DE BREVET EUROPEEN

(11) **EP 1 405 751 B1**
(45) Date de publication et mention de la délivrance du brevet: **18.10.2006**
(21) Numéro de dépôt: 03356141.6
(22) Date de dépôt: 29.09.2003
(51) Int. Cl.: B60K 20/04, F16H 59/02

(54) **Boitier support pour levier de commande d'une boite de vitesses de véhicule automobile**
Trägergehäuse für den Steuerhebel eines Getriebes eines Kraftfahrzeuges
Support case for control lever of a gear box of a motor vehicle

(30) Priorité: 30.09.2002 FR 0212282
(43) Date de publication de la demande: 07.04.2004
(73) Titulaire: Dura Automotive Systems, 91924 Bondoufle (FR)
(72) Inventeur: Pradier, Philippe, 42390 Sorbiers (FR)
(74) Mandataire: Thivillier, Patrick

(56) Documents cités:
- EP-A- 0 704 336
- EP-A- 0 731 293
- US-A- 4 873 884
- US-A- 5 505 103

## Description

L'invention se rattache au secteur technique des équipements pour véhicules automobiles, et plus particulièrement au montage des leviers de commande des boîtes de vitesses, notamment mécaniques.

D'une manière parfaitement connue, un levier de commande de boîte de vitesses est monté avec capacité de déplacement angulaire dans un support fixé sur le plancher du véhicule automobile. Le support présente des agencements pour le montage, avec capacité de déplacement multi-directionnel du levier, notamment sous forme d'une articulation sphérique telle qu'une rotule. L'extrémité inférieure du levier, connue sous le nom de « pied de levier », est située en-dessous du plancher du véhicule, pour être accouplée à des organes de passage et de sélection des vitesses, par des câbles notamment.

Quelle que soit la forme de réalisation du boîtier support, ce dernier est exécuté d'une manière monobloc en constituant un corps où est articulé le levier, ledit corps formant, à sa base, une semelle d'appui et de fixation. L'ensemble du boîtier peut être réalisé par moulage d'une matière plastique. Une forme de réalisation de ce type de boîtier ressort par exemple de l'enseignement du brevet FR 2.725.163, et du brevet US 4.873.884.

Or, il est apparu que le fait de réaliser d'une manière monobloc le boîtier, y compris dans le cas où ce dernier est réalisé par injection d'une matière plastique, présente certains inconvénients. En effet, il n'est pas possible d'obtenir, directement lors de la fabrication du boîtier, des formes ou agencements permettant directement le montage de certains éléments constitutifs de l'ensemble du mécanisme de passage ou de sélection des vitesses.

Il est par exemple nécessaire de prévoir des pièces supplémentaires pour le montage, avec capacité d'articulation multidirectionnelle, du levier de commande au moyen de la rotule. Il en est de même en ce qui concerne l'élément de renvoi de sélection.
Etant donné que l'ensemble du boîtier constitue un corps creux à l'intérieur duquel sont montés les différents éléments de commande de passage et de renvoi, il en résulte une large ouverture, au niveau de la partie inférieure, nécessitant l'emploi d'un couvercle d'obturation et de protection disposé, par exemple, sous le plancher du véhicule. Il est également nécessaire de prévoir des agencements spécifiques pour la liaison de l'ensemble du boîtier avec, par exemple, les câbles de commande de passage et de sélection des vitesses.
A titre indicatif, ce type de boîtier monobloc nécessite l'emploi d'une vingtaine de pièces, depuis le levier de commande jusqu'aux câbles de passage et de sélection des vitesses.

Le brevet EP 0 731 293 constituant la base du préambule de la revendication 1 concerne un ensemble de commande à levier pour une boîte de vitesses mécanique robotisée dont le boîtier est réalisé en deux parties. On observe que, dans ce type de boîtes de vitesses, le problème de réduire le nombre de pièces pour le passage et la section de vitesses ne se pose pas, étant donné que ce type de boîte n'est pas équipé de telles pièces.

L'invention s'est fixée pour but de remédier à ces inconvénients, de manière simple, sûre, efficace et rationnelle.

Le problème que se propose de résoudre l'invention est de créer un boîtier support, de conception spécifique, en ayant pour objectif de diminuer, d'une manière significative, le nombre de pièces nécessaires à la commande de passage et de sélection des vitesses tout en facilitant le montage et l'assemblage des différents éléments constitutifs, de manière à réduire, d'une manière importante, les coûts. A titre indicatif, il est possible de diviser quasiment par deux le nombre de pièces.

Pour résoudre un tel problème, il a été conçu et mis au point un boîtier support conforme aux caractéristiques de la revendication 1.

A partir de cette conception de base, le pied de levier est relié, avec capacité d'articulation, au niveau de l'autre demi-coquille, avec une partie de à l'organe de passage.

Pour résoudre le problème posé d'assujettir les organes de sélection et de passage des vitesses à l'ensemble du boîtier, les parties des organes de sélection et de passage disposées à l'intérieur de chacune des demi-coquilles, sont montées dans des gaines accouplées par un élément entretoise faisant office d'arrêt de gaine, solidaire d'agencements que présentent les deux demi-coquille, lesdits organes de sélection et de passage étant du type à câbles.

Selon une forme de réalisation avantageuse et compte tenu de la réalisation en deux parties de l'ensemble du boîtier, chaque demi-coquille présente une première partie constituant, après assemblage, des logements situé sous le plancher du véhicule où sont accouplés les organes de sélection et de passage, et une deuxième partie constituant, après assemblage, un logement situé au-dessus du plancher, à l'intérieur de l'habitacle, en relation avec un joint d'étanchéité enserrant la deuxième partie. Les deux demi-coquilles sont assemblées par vis.

L'invention est exposée ci-après plus en détail à l'aide des figures des dessins annexés dans lesquels :

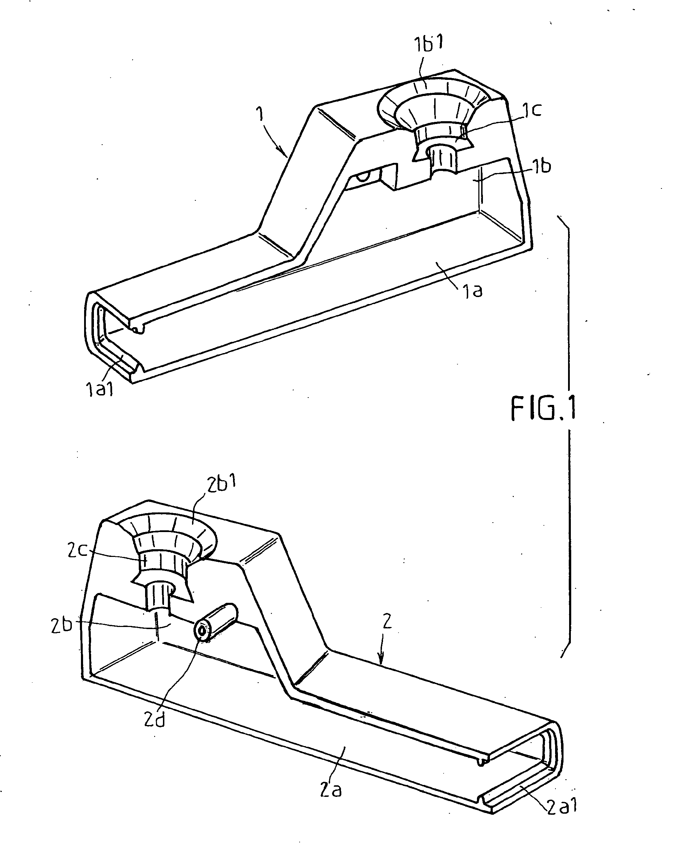

- la figure 1 est une vue en perspective des deux demi-coquilles du boîtier avant assemblage ;

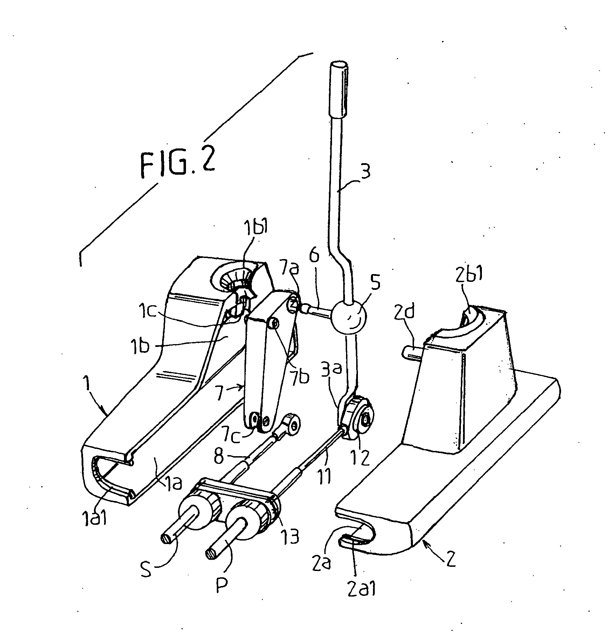

- la figure 2 est une vue en perspective montrant les deux demi-coquilles avant assemblage et avant montage des différents éléments pour le passage et la sélection des vitesses commandées par le levier ;

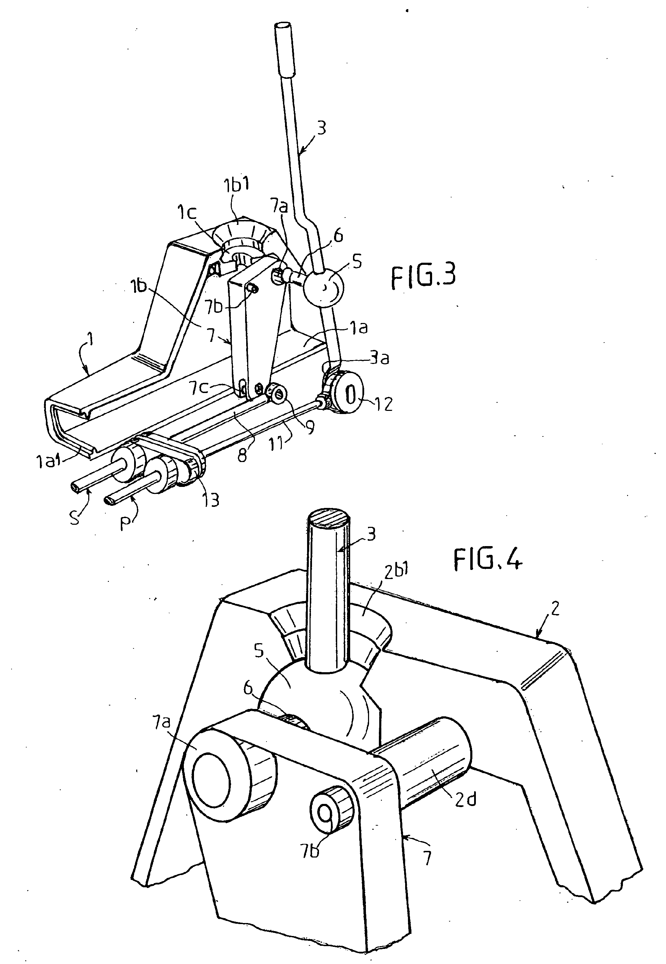

- la figure 3 est une vue en perspective de l'une des demi-coquilles avant montage du levier de commande, de l'élément de renvoi de sélection, et des organes de sélection et de passage ;
- la figure 4 est une vue correspondant à la figure 3 après montage des différents éléments dans les agencements correspondant de la demi-coquille ;
- la figure 5 est une vue en perspective du boîtier résultant de l'assemblage des deux demi-coquilles et après montage des différents éléments de commande, de transmission et de sélection assujettis au levier de commande ;
- la figure 6 est une vue en perspective de dessous correspondant à la figure 5.

Selon une caractéristique à la base de l'invention, l'ensemble du boîtier support est réalisé au moyen de deux demi-coquilles identiques ou quasi-identiques (1) et (2). Chacune des deux demi-coquilles est obtenue par moulage d'une matière plastique et présente des agencements d'accouplement et de fixation selon leur plan longitudinal de symétrie.

Comme il sera indiqué dans la suite de la description, chacune des demi-coquilles (1) et (2) présente une partie (1a) et (2a) pour le logement notamment des organes de sélection et de passage, et une seconde partie (1b) et (2b) de montage et de positionnement, notamment du levier de commande (3). Les parties (1a) et (1b) et (2a) et (2b) constituent par conséquent des cavités internes ; les cavités (1a) et (2a) sont en communication avec une ouverture (1a1) et (2a1) et les cavités (1b) et (2b) sont en communication avec une ouverture (1b1) et (2b1).

Chacune des demi-coquilles (1) et (2) présente, directement lors de la fabrication, des empreintes et agencements aptes à permettre le montage, d'une manière fixe ou avec capacité d'articulation, notamment du levier de commande (3), des organes de passage (P) et de sélection (S) des vitesses.

Les deux demi-coquilles (1) et (2) présentent une empreinte (1c) - (2c) faisant office de cage pour recevoir un montage et le positionnement d'une cartouche (4) sous forme d'une structure tubulaire réalisée notamment en élastomère. Cette cartouche (4) est apte à recevoir, avec capacité d'articulation, une rotule (5) par exemple rendue solidaire d'une partie du levier de commande (3).
L'ensemble du levier (3) et de la rotule (5) peut être réalisé en matériau composite, pour constituer un ensemble unitaire. La rotule (5) présente, sensiblement perpendiculairement au levier (3), un doigt d'accouplement (6) pour le montage d'un élément de renvoi et de sélection des vitesses (7).
Le doigt (6) est engagé au-travers d'une lumière que présente la demi-coquille, pour en déborder en vue d'être engagé dans un trou (7a) de l'élément de renvoi (7). En outre, l'élément de renvoi (7) présente, au niveau supérieur, des agencements d'articulation (7b) coopérant avec des agencements complémentaires (2d) de la demi-coquille (2).

L'extrémité inférieure de l'élément de renvoi (7), opposée à celle accouplée à la rotule (5), est profilée par exemple en forme de chape (7c), ou de rotule, pour la fixation, avec capacité d'articulation, d'une partie de l'organe de sélection (S). Par exemple, cet organe de sélection (S) est constitué, d'une manière connue, par un câble (8) monté dans une gaine. L'extrémité du câble est solidaire d'un embout (9) articulé avec l'élément de renvoi (7).

Le pied de levier (3a) est relié, avec capacité d'articulation, au niveau de l'autre demi-coquille (2), avec une partie de l'organe de passage (P). De la même façon que l'organe de sélection (S), l'organe de passage (P) est constitué, par exemple, par un câble (11) monté dans une gaine. L'extrémité du câble (11) présente est accouplée, d'une manière articulée, au niveau du pied de levier.

Les deux câbles de sélection (8) et de passage (11), engagés dans une gaine correspondante située à l'intérieur des deux demi-coquilles (1) et (2), sont accouplés par un élément entretoise (13) faisant office d'arrêt de gaine. Cet élément entretoise (13), réalisé par exemple en matière caoutchouteuse, présente une gorge périphérique, pour être engagé dans des nervures correspondantes formées au niveau de l'ouverture (1a1) de la demi-coquille (1) et de l'ouverture (2a1) de la demi-coquille (2).

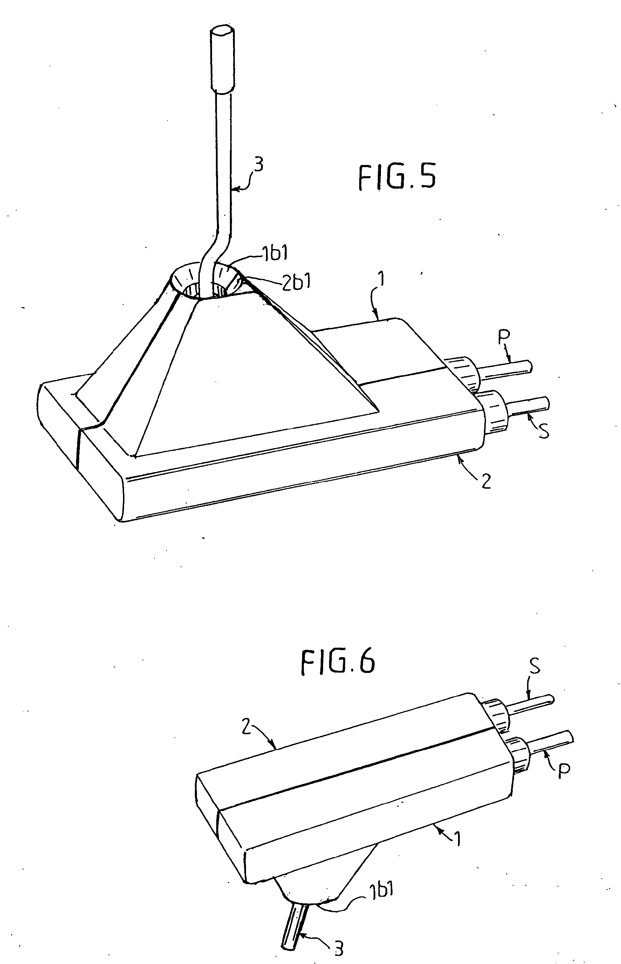

Compte tenu des caractéristiques à la base de l'invention, il apparaît que l'ensemble des organes de commande de passage et de sélection, à savoir notamment le levier (3), l'élément de renvoi (7), les câbles de sélection (8) et de passage (11), peut préalablement être monté, d'une manière simple et aisée, dans l'une des demi-coquilles (1) (figure 4). On conçoit qu'un tel montage est particulièrement aisé, étant donné que les différentes parties constitutives de la demi-coquille destinée à recevoir les éléments considérés, sont parfaitement accessibles. Après montage, il suffit de positionner la demi-coquille (2) sur la demi-coquille (1) et de les assembler au moyen par exemple de vis. Après assemblage des deux demi-coquilles (1) et (2), l'arrêt de gaine (13), obture, d'une manière étanche, l'intérieur du boîtier ainsi formé.

La fixation du boîtier résultant de l'assemblage des deux demi-coquilles (1) et (2), s'effectue au niveau du plancher. Il en résulte que le boîtier présente, d'une part, un logement situé sous le plancher du véhicule où sont accouplés les organes de passage et de sélection, et, d'autre part, un logement situé au-dessus du plancher, à l'intérieur de l'habitacle, pour le débordement du levier (3).

A noter que les deux demi-coquilles (1) et (2) sont assemblées entre elles par tout moyen connu et approprié, tels que vis, collage, ...

Les avantages ressortent bien de la description, en particulier on souligne et on rappelle :
- la diminution du nombre de sous-ensembles de liaison du levier et des différentes pièces annexes ;
- la facilité de montage des différents éléments de renvoi et de passage, y compris des câbles correspondant de commande, en relation avec chaque demi-coquille ;
- la possibilité d'intégrer toutes les fonctions du boîtier, compte tenu de sa réalisation sous forme de deux demi-coquilles ;
- la suppression de la plaque de protection sous le plancher des véhicules ;
- la diminution du coût de production.

## Revendications

1. Boîtier supportant un levier de commande d'une boîte de vitesses mécaniques de véhicule automobile comprenant des organes de passage et de sélection (7) et (8) des vitesses, dans lequel
- le boîtier est réalisé au moyen de deux demi-coquilles (1) et (2) présentant des agencements d'accouplement et de fixation selon un plan longitudinal de symétrie ;
- chacune des demi-coquilles présente, directement lors de leur fabrication, des empreintes et agencements aptes à permettre le montage, d'une manière fixe ou avec capacité d'articulation, notamment du levier de commande (3) et des organes de passage (11) et de sélection (7) et (8) des vitesses ;
- l'une au moins des demi-coquilles (1) présente une empreinte faisant office de cage pour le montage, avec capacité d'articulation, d'une rotule (5) que présente une partie du levier (3) ;
**caractérisé en ce que** la rotule (5) est solidaire d'un doigt d'accouplement (6) pour le montage d'un élément de renvoi (7) de sélection des vitesses articulé dans des agencements de la demi-coquille (1) recevant ladite rotule (5), l'extrémité inférieure de l'élément de renvoi (7), opposée à celle accouplée à la rotule constituant une chape pour la fixation et étant reliée, avec capacité d'articulation, à une partie de l'organe de sélection (8) disposé à l'intérieur de la demi-coquille correspondante.

2. Boîtier support selon la revendication 1, **caractérisé en ce que** le pied de levier est relié, avec capacité d'articulation, au niveau de l'autre demi-coquille, avec une partie de l'organe de passage (11).

3. Boîtier support selon la revendication 1, **caractérisé en ce que** les parties des organes de sélection (8) et de passage (11) disposées à l'intérieur de chacune des demi-coquilles (1) et (2), sont montées dans des gaines accouplées par un élément entretoise (13) faisant office d'arrêt de gaine solidaire d'agencements que présentent les deux demi-coquille, lesdits organes de sélection (8) et de passage (11) étant du type à câbles.

4. Boîtier support selon la revendication 1, **caractérisé en ce que** chaque demi-coquille (1) et (2) présente une première partie constituant, après assemblage, un logement situé sous le plancher du véhicule où sont accouplés les organes de sélection (8) et de passage (11), et une deuxième partie constituant, après assemblage, un logement situé au-dessus du plancher, à l'intérieur de l'habitacle, pour le débordement du levier (3), en relation avec un joint d'étanchéité enserrant la deuxième partie.

5. Boîtier support selon la revendication 1, **caractérisé en ce que** les deux demi-coquilles (1) et (2) sont assemblées par des moyens connus du type vissage, collage.

6. Boîtier support selon la revendication 1, **caractérisé en ce que** chacune des demi-coquilles (1) et (2) est obtenue par moulage d'une matière plastique.

## Claims

1. Housing supporting the control lever of the mechanical gear-box of a motor vehicle comprising components for changing and selecting (7) and (8) the speeds in which
- the housing is made out of two half-shells (1) and (2) fitted with arrangements for coupling and fastening the shells that lie in a longitudinal plane of symmetry;
- each of the half-shells is fitted during manufacture with cavities and arrangements designed to allow for the fixed or hinged fitting of components including the control lever (3) and components for changing (11) and selecting (7) and (8) the speeds;
- at least one of the half-shells (1) includes a cavity that acts as a cage for the hinged fitting of a ball joint (5) presented by part of the lever (3);
**characterised in that** the said ball joint (5) is fastened to a coupling finger (6) for fitting a transfer component (7) for selecting the speeds that is hinged in arrangements in the half-shell (1) receiving the said ball joint (5), the lower end of the transfer component (7) opposite that coupled to the ball joint constituting a fastening clevis and being hingedly coupled to part of the selection component (8) located inside the half shell concerned.

2. Support housing as claimed in claim 1 **characterised in that** the foot of the lever is hingedly connected in the other half shell to part of the changing component (11).

3. Support housing as claimed in claim 1 **characterised in that** those sections of the selection (8) and changing (11) components located inside each of the half shells (1) and (2) are fitted inside sheaths coupled by a spacer component (13) that acts as a sheath stop and is fastened to the arrangements presented by the two half shells, the said selection (8) and changing (11) components being of the cable-actuated type.

4. Support housing as claimed in claim 1 **characterised in that** each half shell (1) and (2) presents a first section that, after assembly, consists of a chamber located under the floor of the vehicle in which the selection (8) and changing (11) components are coupled, and a second section that, after assembly, forms a chamber located above the floor inside the cab into which projects the lever (3), in combination with a leaktight seal that clamps the second section.

5. Support housing as claimed in claim 1 **characterised in that** the two half shells (1) and (2) are assembled by known means such as screws or gluing.

6. Support housing as claimed in claim 1 **characterised in that** the two half shells (1) and (2) are obtained by moulding a plastic material.

## Patentansprüche

1. Gehäuse, das einen Steuerhebel eines mechanischen Getriebes für ein Kraftfahrzeug aufnimmt, und Elemente für die Umschaltung und Auswahl (7) und (8) der Gänge besitzt,
wobei
das Gehäuse mit Hilfe von zwei Halbschalen (1) und (2) hergestellt wird, die entlang einer Symmetrie-Längsebene Verbindungs- und Befestigungsanordnungen besitzen;
jede der Halbschalen direkt bei der Herstellung Vertiefungen und Anordnungen erhält, so dass insbesondere der Steuerhebel (3) und die Elemente für die Umschaltung (11) und Auswahl (7) und (8) der Gänge fest oder mit der Möglichkeit der Schwenkbarkeit montiert werden können; mindestens eine der Halbschalen (1) eine Vertiefung besitzt, die als Gehäuse für die Montage eines drehbaren Kugelgelenkes (5) dient, das sich an dem Steuerhebel (3) befindet;
**dadurch gekennzeichnet, dass** das Kugelgelenk (5) mit einem Verbindungszapfen (6) für die Montage eines Umlenkelementes (7) für die Auswahl der Gänge verbunden ist, das in den Anordnungen der Halbschale (1), welche das Kugelgelenk (5) aufnimmt, drehbar angeordnet ist, wobei das untere Ende des Umlenkelementes (7) gegenüber demjenigen Ende, das mit dem Kugelgelenk verbunden ist, ein Gabelstück für die Befestigung bildet und drehbar mit einem Teil des Auswahlelementes für die Gänge (8) verbunden ist, das im Innern der entsprechenden Halbschale angeordnet ist.

2. Trägergehäuse nach Anspruch 1, **dadurch gekennzeichnet, dass** das untere Ende des Steuerhebels im Bereich der anderen Halbschale drehbar mit einem Teil des Elementes für die Umschaltung (11) verbunden ist.

3. Trägergehäuse nach Anspruch 1, **dadurch gekennzeichnet, dass** die Teile der Elemente für die Auswahl (8) und Umschaltung (11), die im Innern jeder der Halbschalen (1) und (2) angeordnet sind, in Ummantelungen montiert sind, die mit einem Stegelement (13) verbunden sind, das als Anschlag der Ummantelungen dient und wiederum mit Anordnungen verbunden ist, an denen sich die beiden Halbschalen befinden, wobei es sich bei den Elementen für die Auswahl (8) und Umschaltung (11) um Seilelemente handelt.

4. Trägergehäuse nach Anspruch 1, **dadurch gekennzeichnet, dass** die Halbschale (1) und (2) einen ersten Abschnitt besitzt, der nach der Montage aus einer Aufnahme besteht, die sich unter dem Fahrzeugboden befindet, mit der die Elemente für die Auswahl (8) und Umschaltung (11) verbunden sind, sowie einen zweiten Abschnitt, der nach der Montage aus einer Aufnahme besteht, die sich oberhalb des Fahrzeugbodens im Fahrzeuginnenraum befindet, für das Überstehen des Steuerhebels (3) in Verbindung mit einer Abdichtung, die diesen zweiten Abschnitt einklemmt.

5. Trägergehäuse nach Anspruch 1, **dadurch gekennzeichnet, dass** die beiden Halbschalen (1) und (2) durch bekannte Anordnungen wie Schraubverbindungen oder Klebeverbindungen verbunden werden.

6. Trägergehäuse nach Anspruch 1, **dadurch gekennzeichnet, dass** jede der Halbschalen (1) und (2) aus Kunststoffformteilen hergestellt wird.
